# EUROPEAN PATENT APPLICATION

(11) **EP 4 807 641 A1**
(43) Date of publication of application: **16.09.2026**
(21) Application number: 25163056.2
(22) Date of filing: 11.03.2025
(51) Int. Cl.: G06Q 10/06, H04L 67/2866

(54) **METHOD FOR USING A USER EQUIPMENT OR DEVICE WITH A TELECOMMUNICATIONS NETWORK AND/OR FOR IDENTIFYING, BY THE TELECOMMUNICATIONS NETWORK, AN APPLICATION BEING USED BY THE USER EQUIPMENT OR DEVICE, USER EQUIPMENT OR DEVICE, SYSTEM OR TELECOMMUNICATIONS NETWORK, APPLICATION REGISTRY ENTITY, PROGRAM AND COMPUTER-READABLE MEDIUM**

(71) Applicant: Deutsche Telekom AG, 53113 Bonn (DE)
(72) Inventor:
(74) Representative: Schwöbel, Thilo K.

(57) **Abstract**

The invention relates to a method for using a user equipment with a mobile communication network and/or for identifying - by the mobile communication network - an application being used by the user equipment,
wherein the application interacts with the mobile communication network via, or using, an intermediate aggregator entity, wherein the interaction of the application with the mobile communication network involves both, a first service and a second service, the first service being provided to, and consumed by, the application as well as being provided by the intermediate aggregator entity, and the second service being provided to, and consumed by, the intermediate aggregator entity as well as being provided by the mobile communication network,
wherein, in order for the application to be identified by the mobile communication network, the method comprises the following steps:
-- in a first step, the application is installed on, or otherwise transferred to, the user equipment by means of using an application store, and
-- in a second step, the first and/or second services are initiated, and/or operatively provided or consumed in a manner such that the mobile communication network receives a registry identifier information, wherein the registry identifier information is provided by an application registry entity being different from the application store.

## Description

### BACKGROUND

The present invention relates a method for using a user equipment or device with a telecommunications network and/or for identifying - by the telecommunications network - an application being used by the user equipment or device, wherein the application interacts with the telecommunications network via, or using, an intermediate aggregator entity, wherein the interaction of the application with the telecommunications network involves both, a first service and a second service, the first service being provided to, and consumed by, the application as well as being provided by the intermediate aggregator entity, and the second service being provided to, and consumed by, the intermediate aggregator entity as well as being provided by the telecommunications network.

Furthermore, the present invention relates to a user equipment or device for being used with a telecommunications network and/or for using, or executing, an application that is able to be identified by the telecommunications network,
wherein the user equipment or device is configured such that the application interacts with the telecommunications network via, or using, an intermediate aggregator entity, wherein the interaction of the application with the telecommunications network involves both, a first service and a second service, the first service being provided to, and consumed by, the application as well as being provided by the intermediate aggregator entity, and the second service being provided to, and consumed by, the intermediate aggregator entity as well as being provided by the telecommunications network.

Additionally, the present invention relates to a system or a telecommunications network for using a user equipment or device with the telecommunications network and/or for identifying - by the telecommunications network - an application being used by the user equipment or device,
wherein the telecommunications network interacts with the application via, or using, an intermediate aggregator entity, wherein the interaction of the telecommunications network with the application involves both, a first service and a second service, the first service being provided to, and consumed by, the application as well as being provided by the intermediate aggregator entity, and the second service being provided to, and consumed by, the intermediate aggregator entity as well as being provided by the telecommunications network.

Additionally, the present invention relates to an application registry entity, especially for being used in the inventive method, for allowing to identify an application, or the use of an application, especially by a telecommunications network, the application being used, or to be used, by a user equipment or device, especially according to the present invention, wherein the application registry entity generates and/or provides a registry identifier information upon registering the application with the application registry entity.

Furthermore, the present invention relates to a program and to a computer-readable medium for using a user equipment with a mobile communication network and/or for identifying an application being according to the inventive method.

It is conventionally known to use telecommunications networks to provide connectivity to service providers that are potentially offering a plethora of different services to customers or end users. Such customers or end users (i.e. typically subscribers of such telecommunications networks) are typically using user equipments, or user devices - hereinafter also called end user devices - such as (smart) phones, computers, laptops, tablets, (smart) watches, television sets or the like.

In many such cases, mobile communication networks are used as such telecommunications networks to provide connectivity - especially internet connectivity or connectivity to other data networks - to such user equipments or (end user) devices that are connected to the mobile communication networks (or telecommunications networks in general). Typically, mobile communication networks might be non-terrestrial networks (or having a non-terrestrial network part), e.g. networks comprising, or relying on, satellite infrastructure or high-altitude platform infrastructure, and/or terrestrial network (or having a terrestrial part).

Alternatively (to such telecommunications networks being mobile communication networks only), fixed-line telecommunications networks are used as such telecommunications networks to provide such connectivity - or telecommunications networks having both mobile parts and fixed-line parts, i.e. being both mobile communication networks as well as fixed-line telecommunications networks. Such telecommunications networks are typically operated and/or such internet or other connectivity is typically provided by network operators (of such telecommunications networks).

Such user equipments or (end user) devices are increasingly using applications or apps, i.e. pieces of software, that are typically installed on, or loaded to, the user equipments or (end user) devices such that requested (communication) services - e.g. the provision (or transmission) and/or retrieval and/or processing of information or data - are able to be provided, to the customers or end users, by means of using these user equipments or (end user) devices.

Furthermore, providing such (communication) services to user equipments or (end user) devices - i.e. typically by means of the users using such applications or apps or pieces of software installed on, or loaded to, the user equipments or (end user) devices - increasingly involves using services provided by third parties that act as intermediaries (or aggregators) between, on the one hand, a considered application (or app or piece of software) installed on a considered user equipment or (end user) device, and, on the other hand, a service provider (or: the actual service provider) that is used, to provide the service requested by the considered application (or app or piece of software). Hence, due to such an involvement of third parties/intermediaries/aggregators, service providers - such as telecom companies or mobile network operators or other service providers ultimately providing the services that are actually requested by the user equipment or device - might be (and typically are) unable to reliably identify the application or app (or piece of software) being used to trigger the service request that needs to be handled or answered by such service providers, i.e. such service providers are unable to reliably identify the application, app or piece of software being at the origin of the service request to be handled or answered - which service request is itself, typically, not generated by the user equipment or (end user) device or its application or piece of software, but generated by the third party/intermediary/aggregator.

This - i.e. the service provider being unable to reliably identify the application or app (or piece of software) -, results in service providers such as telecom companies or mobile network operators being unable to uniquely identify an application or app, and this might lead, for service providers, to a high risk of compliance breach, e.g. in cases related to end user consent (which might need to be determined or proved to exist), for example regarding the sharing of data, i.e. it might be impossible for the service providers or mobile network operators to precisely know whether such end user content has been granted (or has been revoked) - in the context of using a specific application, app or piece of software.

### SUMMARY

An object of the present invention is to provide a technically simple, effective, and cost-effective solution for using a user equipment or device with a telecommunications network and/or for identifying - by the telecommunications network - an application being used by the user equipment or device, contributing to regulatory compliance. A further object of the present invention is to provide a corresponding user equipment, a corresponding system or mobile communication network, a corresponding application registry entity, and a corresponding program and computer-readable medium.

The object of the present invention is achieved by a method for using a user equipment or device with a telecommunications network and/or for identifying - by the telecommunications network - an application being used by the user equipment or device,
wherein the application interacts with the telecommunications network via, or using, an intermediate aggregator entity, wherein the interaction of the application with the telecommunications network involves both, a first service and a second service, the first service being provided to, and consumed by, the application as well as being provided by the intermediate aggregator entity, and the second service being provided to, and consumed by, the intermediate aggregator entity as well as being provided by the telecommunications network,
wherein, in order for the application to be identified by the telecommunications network, the method comprises the following steps:
   -- in a first step, the application is installed on, or otherwise transferred to, the user equipment or device by means of using a software store or marketplace, and
   -- in a second step, the first and/or second services are initiated, and/or operatively provided or consumed in a manner such that the telecommunications network receives a registry identifier information, wherein the registry identifier information is provided by an application registry entity being different from the software store or marketplace.

It is thereby advantageously possible according to the present invention to realize, by means of providing an application registry entity (and/or an application registry functionality), a possibility - for the service provider or telecommunications network or network operator - to uniquely identify a specific application, app or piece of software, i.e. the use of such a specific application, app or piece of software by the a user equipment or device, - even though such specific application, app or piece of software does not directly interact with the service provider or telecommunications network or network operator, but only indirectly, i.e. using the intermediate aggregator entity.

In case that service providers such as telecom companies or mobile network operators need to uniquely identify (the use of) an application or app (e.g. in view to be able to determine whether end user consent, e.g. for sharing data, has been granted to the respective service provider or mobile network operator), the present invention provides this possibility by using the registry identifier information that is received by the telecommunications network (or service provider or mobile network operator). According to the present invention, by means of the registry identifier information, it is possible to uniquely identify (or globally uniquely identify) the application or app or piece of software even though there is no direct (service) interaction between the application or app or piece of software and the service provider (or telecommunications network or mobile network operator).

Even though it might be conventionally known that applications, apps or pieces or software indeed have identifiers (or: that identifiers are used in order to identify such applications, apps or pieces of software), such conventionally known identifiers are typically not (strictly speaking, or: globally) unique, i.e. such identifiers might be unique only in a certain context, e.g. in the context of a specific software store, Appstore or marketplace (such as the Apple Appstore and Google Playstore, Azure Marketplace, AWS Marketplace, etc.) but might either be not unique, or alternatively, undefined.

In conventionally known telecommunications networks, especially (but not necessarily) mobile communication networks, this results in service providers such as telecom companies or mobile network operators being unable to uniquely identify (the use of) an application or app or piece of software (e.g. in view to determine whether end user consent, e.g., for sharing data has (or has not) been granted, to the service provider or mobile network operator in the context of using the respective application or app or piece of software). This might lead to a high risk of compliance breach for such service providers.

This problem is especially critical in case that service providers such as telecom companies or mobile network operators offer their services or capabilities across several channels and via multiple intermediaries like aggregators.

Such intermediaries or aggregators (in the context of the present invention also called intermediate aggregator entities) typically identify apps (or applications or pieces of software) with their own individual (i.e. aggregator-individual) identifiers (i.e. expose ), making it impossible (for the service providers/telecom companies/mobile network operators) to identify the use of the specific app (or application or piece of software) uniquely and, especially, spot duplicates.

For example, if an app "ABC" (e.g. an app of a travel agency) would like to integrate with a service interface (or product) of a telecom service provider (e.g. a telecom service provider's device-roaming-status API (application programming interface) product), and in case that (e.g. for reasons such as ensuring optimal coverage (of different network providers) or price arbitrage) this app buys this API product (i.e. of the same telecom service provider or network operator) via two different aggregator companies X and Y, then, typically, company X requests access to the service provider's API product (on behalf of, or within the context of, app "ABC") and provides a randomly generated app Id like, e.g., "123" (i.e. an app identifier or app identifier information being specific to company X, or defined more or less exclusively by company X) for integrating with the app "ABC". Likewise, company Y requests (at the telecom service provider's API product, exemplarily its device-roaming-status API) access for the same app (i.e. app "ABC") but provides another randomly generated app Id, like, e.g., "456" to the service provider's API product.

In such a situation, the service provider (i.e. exemplarily the telecom service provider's device-roaming-status API) is not able to spot that the two app Ids ("123" vs. "456") actually refer to the same app (i.e. app "ABC") from which (or from which context) both such kinds of requests originate. Thus, in case that the service provider is required to ask the end customer for some kind of consent (e.g. to share their device's roaming status data), this service provider will end up asking the end customer for this same consent twice, hence leading to an increased effort for the service provider, but also to a rather bad end user experience (and, perhaps, incomprehension or misunderstanding). Moreover, there is a bigger risk that if the end customer revokes consent for app "ABC" in view of, or in the context of, it being mapped to app Id "123" (but not its context to app Id "456"), the service provider might continue sharing the end customer's data via the access granted to App Id "456", as it is not realizing that the app Ids "123" and "456" represent the same app, application or piece of software. The situation exemplarily described might, thus, lead to a compliance breach followed by possibly hefty penalties levied on the service providers by the regulators.

According to the present invention, this situation is possible to be averted by means of using the registry identifier information - i.e. an information being (or being associated to) a unique, or globally unique, way to identify the app, application or piece of software: In the situation described, both aggregators would have used
-- either the same registry identifier information (i.e. literally the same, or, at least, comprising some common component), or, at least,
-- some (perhaps different) registry identifier information that is, ultimately, able to be traced to the same (especially globally unique) app Id,
thus providing the possibility to avoid the afore mentioned problem.

Hence, according to the present invention, it is advantageously possible to uniquely identify an app, application or piece of software, independently from any specific software store, appstore or marketplace - in other words, it is advantageously possible to provide an appstore-agnostic app-registry (or application registry entity) as well as a method for identifying applications (or apps or pieces of software) globally and independent of existing local/proprietary app-store registries, thus creating a solution to uniquely identify a third-party application globally, and advantageously providing the possibility to act consistently - e.g. in view to realize consent management solution concepts - in seemingly different situations that, however, relate to an identical context because of its relation to one and the same originating application.

According to the present invention, it is, thus, advantageously possible to identify an application (or app/piece of software), being used by a user equipment or (user) device, by a telecommunications network (or service provider) - even though such application (or app/piece of software) is not directly interacting with the telecommunications network (or service provider). According to the present invention, the interaction between the application, one the one hand, and the service provider, on the other hand, is only indirect due to this interaction being realized via, or using, an intermediate aggregator entity - i.e. the interaction is not direct, or, stated differently, the application is separated, or shielded, from the service provider (or vice versa) by the intermediate aggregator entity. This indirect interaction of the application with the telecommunications network typically involves a first service and a second service, wherein
-- the first service is provided to (and consumed by) the application (i.e. by, or on, the user equipment or (user) device) and provided by the intermediate aggregator entity, and
-- the second service is provided to (and consumed by) the intermediate aggregator entity and provided by the telecommunications network.

According to the present invention and despite this separation, the application is able to be (especially uniquely) identified by the telecommunications network (or service provider) by means of the steps of (of course) installing (or otherwise transferring) the application on (or to) the user equipment or device - which is usually done by means of using a software store or marketplace -, and by means of the first and/or second services being initiated, and/or operatively provided or consumed in a manner such that the telecommunications network receives a registry identifier information, wherein the registry identifier information is provided by an application registry entity being different from the software store or marketplace.

Thus, by means of the application registry entity providing the registry identifier information, it is advantageously possible to uniquely identifier the app, application or piece of software.

According to the present invention, it is possible and preferred that the first and/or second services are initiated, and/or operatively provided or consumed especially involving all of the application, the intermediate aggregator entity, and the telecommunications network, and
wherein the registry identifier information is received by the telecommunications network by means of at least one out of the following:
-- the telecommunications network receives the registry identifier information, and the registry identifier information is transmitted by the user equipment or device and/or the intermediate aggregator entity,
-- the telecommunications network receives the registry identifier information by means of the telecommunications network retrieving the registry identifier information, especially by means of accessing the application registry entity.

It is thereby advantageously possible, according to the present invention, to efficiently and flexibly provide the registry identifier information to the telecommunications network.

In a further embodiment of the present invention, it is possible and preferred that the registry identifier information is a unique identifier information, being assigned to the application, wherein especially the registry identifier information is a globally unique identifier information,
wherein especially the registry identifier information is able to be accessed at, or obtained from, the application registry entity or an instance thereof.

By means of the registry identifier information being a unique identifier information, it is advantageously possible to unambiguously determine the app, application or piece of software assigned.

Still furthermore, it is also possible and preferred, according to the present invention, that the registry identifier information identifies the application,
wherein especially the application is able to be identified and/or the registry identifier information is able to be retrieved from the application registry entity by means of providing one or a plurality of attributes, especially comprising at least one out of the following:
   -- application name,
   -- application identifier,
   -- application version,
   and/or
wherein especially the application registry entity maintains metadata about the application, wherein the metadata comprises at least one out of the following:
   -- privacy policies,
   -- contact information.

Still furthermore, it is also possible and preferred, according to the present invention, that - while the application is installed on, or otherwise transferred to, the user equipment or device - this installation or this transfer involves a store identifier information that is related to, or provided by, the software store or marketplace,
wherein especially the software store or marketplace is associated with, or determined or selected by, the operating system of the user equipment or device.

Furthermore, the present invention relates to a user equipment or (user) device for being used with a telecommunications network and/or for using, or executing, an application that is able to be identified by the telecommunications network,
wherein the user equipment or device is configured such that the application interacts with the telecommunications network via, or using, an intermediate aggregator entity, wherein the interaction of the application with the telecommunications network involves both, a first service and a second service, the first service being provided to, and consumed by, the application as well as being provided by the intermediate aggregator entity, and the second service being provided to, and consumed by, the intermediate aggregator entity as well as being provided by the telecommunications network,
wherein, in order for the application to be identified by the telecommunications network, the user equipment or device is configured such that:
   -- the user equipment or device receives, from a software store or marketplace, the application and is configured for the application to be run on or be executed by the user equipment or device, and
   -- the first and/or second services are initiated, and/or operatively provided or consumed - especially involving all of the application, the intermediate aggregator entity, and the telecommunications network - in a manner such that the telecommunications network receives a registry identifier information, wherein the registry identifier information is provided by an application registry entity being different from the software store or marketplace.

Still furthermore, the present invention relates to a system or telecommunications network for using a user equipment or device with the telecommunications network and/or for identifying - by the telecommunications network - an application being used by the user equipment or device,
wherein the telecommunications network interacts with the application via, or using, an intermediate aggregator entity, wherein the interaction of the telecommunications network with the application involves both, a first service and a second service, the first service being provided to, and consumed by, the application as well as being provided by the intermediate aggregator entity, and the second service being provided to, and consumed by, the intermediate aggregator entity as well as being provided by the telecommunications network,
wherein, in order for the application to be identified by the telecommunications network, the system or telecommunications network is configured such that:
   -- the application is installed on, or otherwise transferred to, the user equipment or device by means of using a software store or marketplace, and
   -- the first and/or second services are initiated, and/or operatively provided or consumed - especially involving all of the application, the intermediate aggregator entity, and the telecommunications network - in a manner such that the telecommunications network receives a registry identifier information, wherein the registry identifier information is provided by an application registry entity being different from the software store or marketplace.

Furthermore, the present invention relates to an application registry entity, especially for being used in a method according to one of claims 1 to 4, for allowing to identify an application, or the use of an application, especially by a telecommunications network, the application being used, or to be used, by a user equipment or device, wherein the application registry entity generates and/or provides a registry identifier information upon registering the application with the application registry entity.

Especially, according to the present invention, it is preferred that the application registry entity is realized in a distributed manner, especially being geographically distributed and/or realizing a mesh application registry entity being geographically distributed or having geographically distributed instances of the application registry entity.

It is furthermore preferred that the application registry entity comprises lookup capabilities and/or discovery capabilities and/or management capabilities such that
-- a requesting entity, especially the telecommunications network, is able to identify the specific application, and/or
-- a registering entity or an updating entity, especially the software store or marketplace, is able to register and/or update and/or manage the specific application, especially using an application registry store front entity of the application registry entity,
wherein especially the application register entity is realized in a distributed manner, especially being geographically distributed and/or realizing a mesh application registry entity being geographically distributed or having geographically distributed instances of the application registry entity.

Additionally, the present invention relates to a program comprising a computer readable program code, which, when executed on a computer and/or on a user equipment or device and/or on a network node of a telecommunications network and/or on an application registry entity and/or on an intermediate aggregator entity, or in part on a user equipment or device and/or in part on the network node of the telecommunications network and/or in part on an application registry entity and/or in part on an intermediate aggregator entity, causes the computer and/or the user equipment or device and/or the network node of the telecommunications network and/or the application registry entity and/or the intermediate aggregator entity to perform the inventive method.

Still additionally, the present invention relates to a computer-readable medium comprising instructions which when executed on a computer and/or on a user equipment or device and/or on a network node of a telecommunications network and/or on an application registry entity and/or on an intermediate aggregator entity, or in part on a user equipment or device and/or in part on the network node of the telecommunications network and/or in part on an application registry entity and/or in part on an intermediate aggregator entity, causes the computer and/or the user equipment or device and/or the network node of the telecommunications network and/or the application registry entity and/or the intermediate aggregator entity to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates the situation of a user equipment that is provided with connectivity by a mobile communication network comprising an access network and a core network, wherein the user equipment is connected to the mobile communication network using a base station entity.
Figure 2 schematically and exemplarily illustrates the method for identifying - by the telecommunications network - an application being used by the user equipment, using an application registry entity and a registry identifier information.
Figure 3 schematically and exemplarily illustrates an example of an embodiment of the application registry entity.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

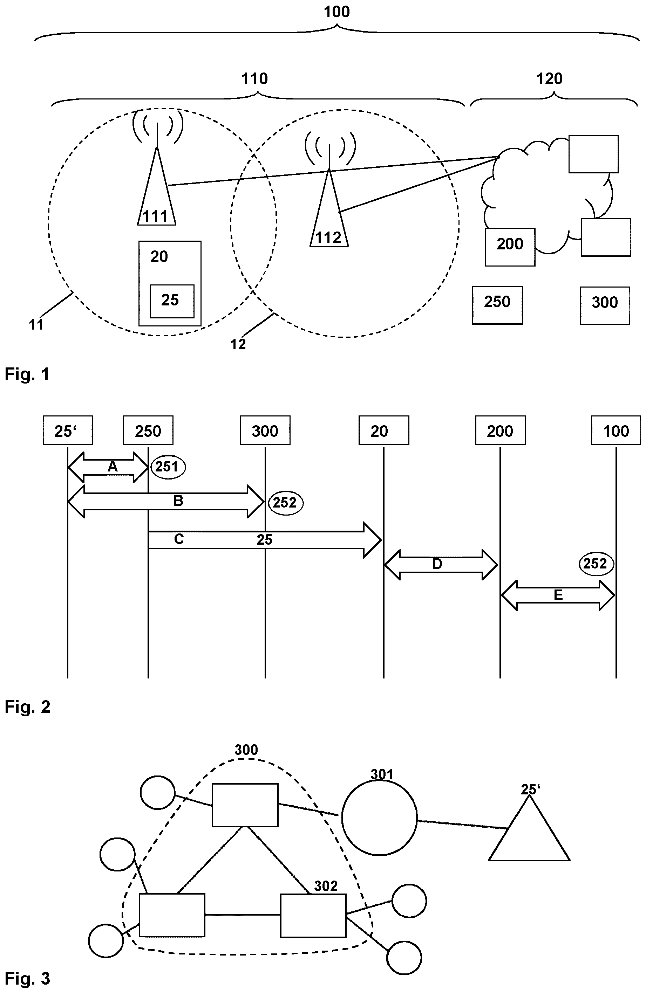

In Figure 1, a mobile communication network 100 is exemplarily shown comprising an access network 110 and a core network 120, wherein the access network 110 comprises a plurality of radio cells 11, 12, i.e. geographical areas served, respectively, by base station entities, and wherein, in the exemplary situation or scenario shown in Figure 1, a base station entity 111 generates or is associated with or spans the first (terrestrial) radio cell 11, and a different base station entity 112 generates or is associated with or spans the second (terrestrial) radio cell 12 (the first and second (terrestrial) radio cells 11, 12 being represented, in Figure 1, by means of dashed circles around the different base station entity 111, 112, respectively. The core network 120, typically comprises a number of network functions or services that are not specifically indicated, in Figure 1, by means of a reference sign.

The mobile communication network 100 is just an example of a telecommunications network 100, i.e. a network that might be a fixe-line telecommunications network or partly a fixed-line telecommunications network and partly a mobile communication network. In the exemplary representation of Figure 1, the mobile communication network 100 (as an example of the telecommunications network 100) together with a user equipment 20 (as an example of a (user) device) is shown, wherein the mobile communication network 100 provides the user equipment 20 with connectivity, e.g. internet connectivity, or connectivity to another data network.

Hence, it is to be understood, according to and in the context of the present invention that the mobile communication network 100 is only an example of a more general telecommunications network 100, and, likewise, the user equipment 20 - e.g. a mobile device such as a smart phone, tablet or laptop computer - is only an example of a (user) device 20 being provided with connectivity (to some data network) by the telecommunications network 100.

According to the present invention, the user equipment 20 (or (user) device 20) comprises an application 25 (or app or piece of software). The application is typically installed on, or otherwise transferred to, the user equipment or (user) device 20 by means of using a software store or marketplace 250.

The application 25 interacts with the telecommunications network 100 via, or using, an intermediate aggregator entity 200, and this interaction involves both, a first service and a second service (not specifically shown in Figure 1). The first service is provided to, and consumed by, the application 25 as well as being provided by the intermediate aggregator entity 200. The second service is provided to, and consumed by, the intermediate aggregator entity 200 as well as being provided by the telecommunications network 100.

According to the present invention, the first and/or second services are initiated, and/or operatively provided or consumed in a manner such that the telecommunications network 100 receives a registry identifier information that is provided by an application registry entity 300 that is different from the software store or marketplace 250.

This is schematically shown in Figure 2 which exemplarily illustrates the method for identifying - by the telecommunications network 100 - the application 25 (that is used by the user equipment or (user) device 20) while using the application registry entity 300 and a registry identifier information 252.

Figure 2 schematically hints at a communication diagram between an app developer 25' (or programmer), the software store or marketplace 250, the application registry entity 300, the user equipment or (user) device 20, the intermediate aggregator entity 200, and the telecommunications network 100.

In a first processing step (indicated by means of reference sign A), the app developer 25' (or programmer) creates the app or application (or piece of software), and provides it to the software store or marketplace 250 - in view of being registered by the software store or marketplace 250. This typically involves a store identifier information 251 to be created, or generated, by the software store or marketplace 250.

In a second processing step (indicated by means of reference sign B), the app developer 25' (or programmer) provides the app or application (or piece of software) also to the application registry entity 300 - likewise in view of being registered - but this time by the application registry entity 300. This involves the registry identifier information 252 to be created, or generated, by the application registry entity 300. It is to be said that this registration at, or by the application registry entity 300 could also be performed differently (i.e. not necessarily initiated by the app developer), e.g. by means of an interaction between the software store or marketplace 250 and the application registry entity 300.

However, what is important in the context of the present invention, is that the registry identifier information 252 is an identifier or information that uniquely identifies - especially globally uniquely - the application, app or piece of software 25 (in a manner independent from the store identifier information 251 identifying the app or application (or piece of software) in the context of the software store or marketplace 250).

In a third processing step (indicated by means of reference sign C), the app or application (or piece of software) is installed on (or otherwise transferred to) the user equipment or device 20 by means of using a software store or marketplace 250; the third processing step C corresponds to the first method step of the inventive method.

In a fourth processing step (indicated by means of reference sign D), the first service is provided to, and consumed by, the application 25 (being installed on, or executed by, the user equipment or (user) device 20) - as well as being provided by the intermediate aggregator entity 200.

In a fifth processing step (indicated by means of reference sign E), the second service is provided to, and consumed by, the intermediate aggregator entity 200 as well as being provided by the telecommunications network 100.

According to the present invention, the first and/or second services (i.e. the fourth and fifth processing steps D, E) are initiated, and/or operatively provided or consumed in a manner such that the telecommunications network 100 receives the registry identifier information 252 (which is schematically indicated, in Figure 2, by means of reference sign 252 near the telecommunications network 100. Of course, the registry identifier information 252 is somehow provided to the telecommunications network 100. This might involve different mechanisms that are only hinted at here: For example, the registry identifier information 252 might be provided, i.e. transmitted, from the user equipment or device 20 towards the intermediate aggregator entity 200, and from there to the telecommunications network 100. This assumes that the user equipment or device 20 needs to receive the registry identifier information 252 somehow; this might involve the registry identifier information 252 to transmit, by the application registry entity 300, to the software store or marketplace 250, and from there to the user equipment or device 20, e.g. (but not necessarily) as part of the app or application 25, e.g. during the installation process of the app or application on the user equipment or device 20 (cf. third processing step C). Alternatively, the user equipment or device 20 might also (e.g. based on the store identifier information 251) retrieve the registry identifier information 252 directly from the application registry entity 300, i.e. without an involvement of the software store or marketplace 250. However, alternatively to the registry identifier information 252 being provided by the user equipment or device 20, it could also be retrieved (from the application registry entity 300) by the intermediate aggregator entity 200, and provided to the telecommunications network 100.

In Figure 3, an example of an embodiment of the application registry entity 300 is schematically represented - besides a schematical representation of the app developer 25'. The application registry entity 300 exemplarily comprises an application registry store front entity 301, and is realized in a distributed manner, e.g. having geographically distributed instances 302 of the application registry entity 300.

According to the present invention, the application registry entity 300 especially has lookup and discovery capabilities, i.e. it is a system that allows users or services to register, discover, and manage applications. It is a where apps or applications are listed, and anyone (or anything) that needs to interact with those applications can easily look them up based on certain attributes (such as app name, app identifier, version, etc.). The workflow of such an application registry entity 300 includes registration, discovery and updates. The application registry entity 300 also maintains important metadata about the app or applications such as privacy policies, contact info etc. The application registry entity 300 especially provides access control and security to ensure that only authorized users and services can register and update the apps or applications.

Globally available means that the registry identifier information 252 is unique and available in a global context. It also indicates that the system offering this service is globally reachable and especially is a distributed system so that it can support application lookup requests at scale.

The application registry entity 300 especially works similar to the way that users buy domain names. There are many "domain registers" where users go to purchase a domain name. They all connect back to a central registry that verifies that the domain name is unique and not in use. Especially, the application registry entity 300 has a store front 301 where an app developer 25' registers their app ensuring that it is unique from all others. Once registered, the app or application (i.e. reference information thereof) is stored in the global application registry entity 300 so that no others will use the same app-identifier or registry identifier information 252. The high-level architecture is especially similar to how the DNS (domain name system) works today where there are a limited number of servers that make up a mesh so that any one server always has the latest registry but such servers are geographically distributed for both redundance and performance reasons. This mesh houses the app registry or application registry entity 300. Then individual storefronts 301 similar to today's domain registries are able to connect to the global mesh allowing them to look up and offer the ability to register apps to the application registry entity 300.

The lookup capabilities can be compared to the lookups available under ICANN (https://lookup.icann.org/). ICANN offers the lookup for domain names.

Once an app or an application (or piece of software) is registered, other services or users can search or look up such app or application based on specific criteria (like app name, app identifier, or legal entity) to discover and interact with them. This can be facilitated with a simple discovery functionality using app names or app identifiers and advanced filtering such as searches based on app status or supported platforms etc.

According to the present invention, the application registry entity 300 comprises powerful lookup capabilities and is structured hierarchically to facilitate easy discovery and management. At the top level, the registry will feature the main legal entity responsible for the apps. Beneath this top level, the application registry entity 300 has a nested structure representing key subsidiaries that fall under the main entity. Each subsidiary has a dedicated space where its relevant applications are listed.

To ensure seamless identification and tracking, each app is assigned a unique identifier (i.e. the registry identifier information 252) in addition to its name. This structure enables an efficient organization, easy app discovery, and clear associations between legal entities, subsidiaries, and their respective applications.

In the following, a sample structure is shown based on the example of Alphabet Inc.:

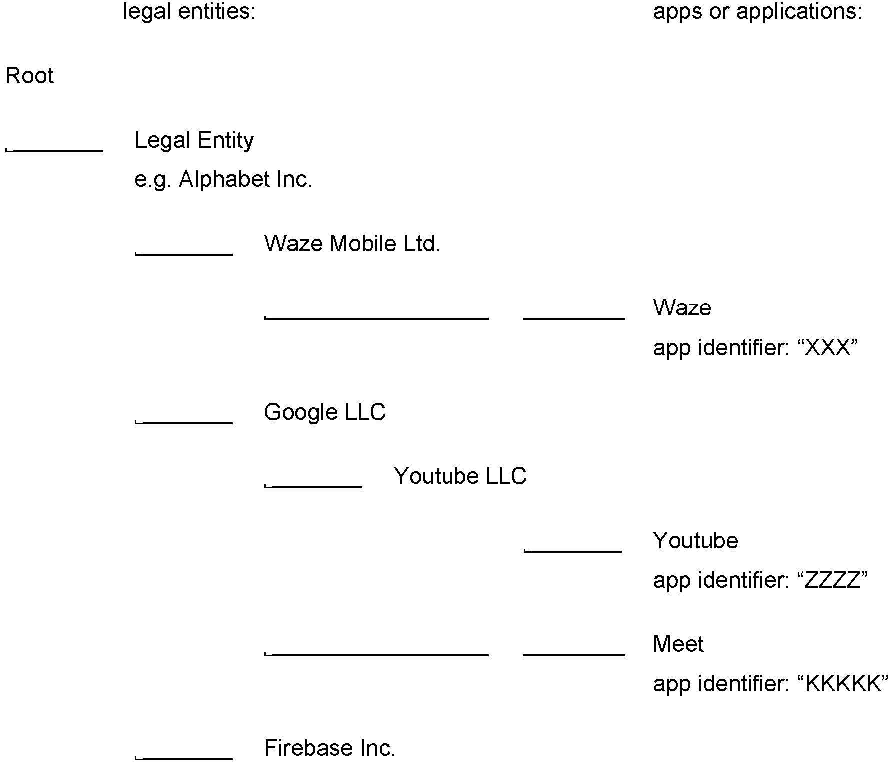

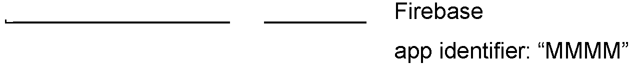

This is just an example for a tree-like structure of the information organized in the application registry entity 300; regarding - exemplarily - the youtube-app and the firebase-app the following data structures might be found as part of the application registry entity 300:

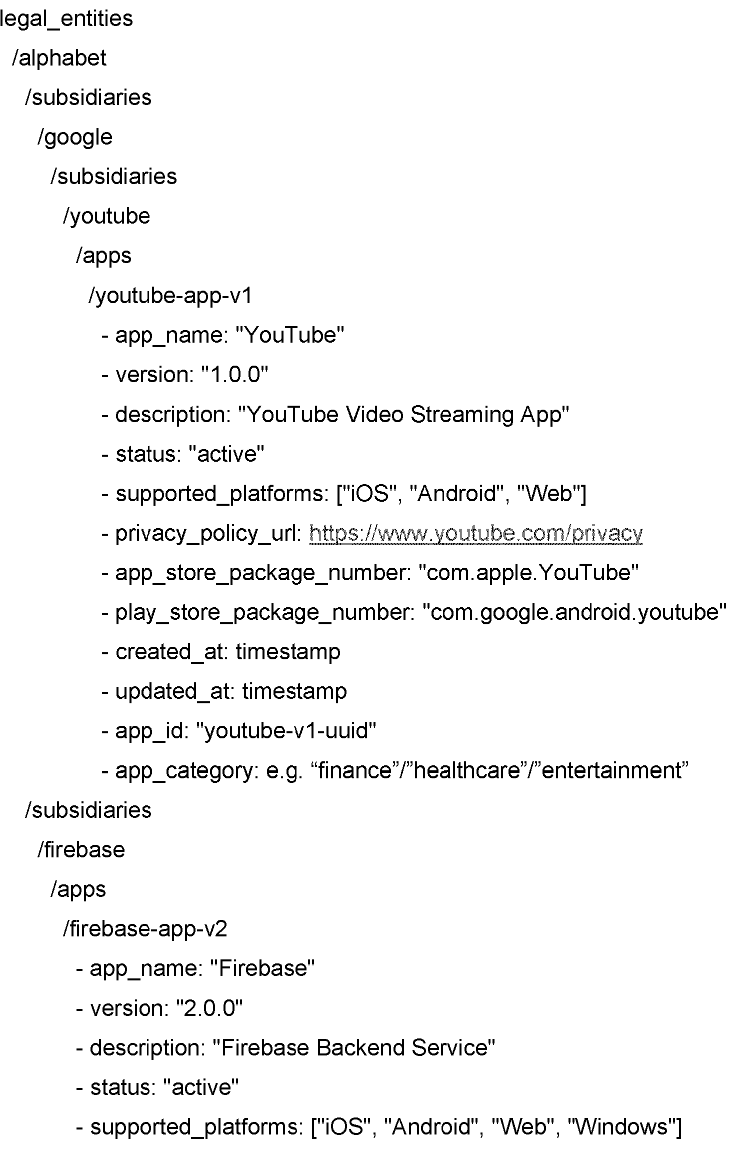

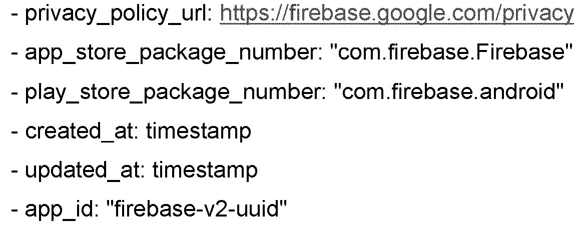

Especially according to the present invention, the app-registry (or application registry entity 300) will also ensure that there are no duplicates, e.g. by means of using the hierarchical structure which makes it possible to enforce uniqueness at the registration level and users will be denied permissions to add duplicates. Furthermore especially, any application - especially new applications to be added to the application registry entity 300 - needs to provide description text and tags to enable search capabilities in the registry or application registry entity 300. This metadata or additional attributes and tags can be used for audit by the registry implementors to flag suspicious cases which can then be investigated. Furthermore, duplicates are prevented by means of using, as much as possible, standard naming conventions.

Thus, according to the present invention, it is advantageously possible to create an appstore- or marketplace-agnostic app-registry (i.e. application registry entity 300) which is available globally. This registry is able to assign a globally unique app identifier (or registry identifier information 252) to an app or application (or to any piece of software registered by means of the application registry entity 300. The app-registry (or application registry entity 300) especially offers discovery/lookup capabilities to allow industry partners and service providers/integrators to search for the app. The app-registry will also ensure that there are no duplicates, and its respective schema will allow storing app metadata such as app name, description, age classification, application logo, link to app's privacy policies, legal and/or business entity behind the app etc.

## Claims

1. Method for using a user equipment or device (20) with a telecommunications network (100) and/or for identifying - by the telecommunications network (100)
- an application (25) being used by the user equipment or device (20), wherein the application (25) interacts with the telecommunications network (100) via, or using, an intermediate aggregator entity (200), wherein the interaction of the application (25) with the telecommunications network (100) involves both, a first service and a second service, the first service being provided to, and consumed by, the application (25) as well as being provided by the intermediate aggregator entity (200), and the second service being provided to, and consumed by, the intermediate aggregator entity (200) as well as being provided by the telecommunications network (100), wherein, in order for the application (25) to be identified by the telecommunications network (100), the method comprises the following steps:
-- in a first step, the application (25) is installed on, or otherwise transferred to, the user equipment or device (20) by means of using a software store or marketplace (250), and
-- in a second step, the first and/or second services are initiated, and/or operatively provided or consumed in a manner such that the telecommunications network (100) receives a registry identifier information (252), wherein the registry identifier information (252) is provided by an application registry entity (300) being different from the software store or marketplace (250).

2. Method according to claim 1, wherein the first and/or second services are initiated, and/or operatively provided or consumed especially involving all of the application (25), the intermediate aggregator entity (200), and the telecommunications network (100), and
wherein the registry identifier information (252) is received by the telecommunications network (100) by means of at least one out of the following:
-- the telecommunications network (100) receives the registry identifier information (252), and the registry identifier information (252) is transmitted by the user equipment or device (20) and/or the intermediate aggregator entity (200),
-- the telecommunications network (100) receives the registry identifier information (252) by means of the telecommunications network (100) retrieving the registry identifier information (252), especially by means of accessing the application registry entity (300).

3. Method according to one of the preceding claims, wherein the registry identifier information (252) is a unique identifier information, being assigned to the application (25), wherein especially the registry identifier information (252) is a globally unique identifier information,
wherein especially the registry identifier information (252) is able to be accessed at, or obtained from, the application registry entity (300) or an instance (302) thereof.

4. Method according to one of the preceding claims, wherein the registry identifier information (252) identifies the application (25),
wherein especially the application (25) is able to be identified and/or the registry identifier information (252) is able to be retrieved from the application registry entity (300) by means of providing one or a plurality of attributes, especially comprising at least one out of the following:
-- application name,
-- application identifier,
-- application version,
and/or
wherein especially the application registry entity (300) maintains metadata about the application (25), wherein the metadata comprises at least one out of the following:
-- privacy policies,
-- contact information.

5. Method according to one of the preceding claims, wherein - while the application (25) is installed on, or otherwise transferred to, the user equipment or device (20) - this installation or this transfer involves a store identifier information (251) that is related to, or provided by, the software store or marketplace (250),
wherein especially the software store or marketplace (250) is associated with, or determined or selected by, the operating system of the user equipment or
device (20).

6. User equipment or device (20) for being used with a telecommunications network (100) and/or for using, or executing, an application (25) that is able to be identified by the telecommunications network (100),
wherein the user equipment or device (20) is configured such that the application (25) interacts with the telecommunications network (100) via, or using, an intermediate aggregator entity (200), wherein the interaction of the application (25) with the telecommunications network (100) involves both, a first service and a second service, the first service being provided to, and consumed by, the application (25) as well as being provided by the intermediate aggregator entity (200), and the second service being provided to, and consumed by, the intermediate aggregator entity (200) as well as being provided by the telecommunications network (100),
wherein, in order for the application (25) to be identified by the telecommunications network (100), the user equipment or device (20) is configured such that:
-- the user equipment or device (20) receives, from a software store or marketplace (250), the application (25) and is configured for the application to be run on or be executed by the user equipment or device (20), and
-- the first and/or second services are initiated, and/or operatively provided or consumed - especially involving all of the application (25), the intermediate aggregator entity (200), and the telecommunications network (100) - in a manner such that the telecommunications network (100) receives a registry identifier information (252), wherein the registry identifier information (252) is provided by an application registry entity (300) being different from the software store or marketplace (250).

7. System or telecommunications network (100) for using a user equipment or device (20) with the telecommunications network (100) and/or for identifying - by the telecommunications network (100) - an application (25) being used by the user equipment or device (20),
wherein the telecommunications network (100) interacts with the application (25) via, or using, an intermediate aggregator entity (200), wherein the interaction of the telecommunications network (100) with the application (25) involves both, a first service and a second service, the first service being provided to, and consumed by, the application (25) as well as being provided by the intermediate aggregator entity (200), and the second service being provided to, and consumed by, the intermediate aggregator entity (200) as well as being provided by the telecommunications network (100),
wherein, in order for the application (25) to be identified by the telecommunications network (100), the system or telecommunications network (100) is configured such that:
-- the application (25) is installed on, or otherwise transferred to, the user equipment or device (20) by means of using a software store or marketplace (250), and
-- the first and/or second services are initiated, and/or operatively provided or consumed - especially involving all of the application (25), the intermediate aggregator entity (200), and/or the telecommunications network (100) - in a manner such that the telecommunications network (100) receives a registry identifier information (252), wherein the registry identifier information (252) is provided by an application registry entity (300) being different from the software store or marketplace (250).

8. Application registry entity (300), especially for being used in a method according to one of claims 1 to 4, for allowing to identify an application (25), or the use of an application (25), especially by a telecommunications network (100), the application (25) being used, or to be used, by a user equipment or device (20), wherein the application registry entity (300) generates and/or provides a registry identifier information (252) upon registering the application (25) with the application registry entity (300).

9. Application registry entity (300) according to claim 8, wherein the application registry entity (300) is realized in a distributed manner, especially being geographically distributed and/or realizing a mesh application registry entity being geographically distributed or having geographically distributed instances (302) of the application registry entity (300).

10. Application registry entity (300) according to claim 8 or 9, wherein the application registry entity (300) comprises lookup capabilities and/or discovery capabilities and/or management capabilities such that
-- a requesting entity, especially the telecommunications network (100), is able to identify the specific application (25), and/or
-- a registering entity or an updating entity, especially the software store or marketplace (250), is able to register and/or update and/or manage the specific application (25), especially using an application registry store front entity (301) of the application registry entity (300),
wherein especially the application register entity (300) is realized in a distributed manner, especially being geographically distributed and/or realizing a mesh application registry entity being geographically distributed or having geographically distributed instances (302) of the application registry entity (300).

11. Program comprising a computer readable program code, which, when executed on a computer and/or on a user equipment or device (20) and/or on a network node of a telecommunications network (100) and/or on an application registry entity (300) and/or on an intermediate aggregator entity (200), or in part on a user equipment or device (20) and/or in part on the network node of the telecommunications network (100) and/or in part on an application registry entity (300) and/or in part on an intermediate aggregator entity (200), causes the computer and/or the user equipment or device (20) and/or the network node of the telecommunications network (100) and/or the application registry entity (300) and/or the intermediate aggregator entity (200) to perform a method according to one of claims 1 to 5.

12. Computer-readable medium comprising instructions which when executed on a computer and/or on a user equipment or device (20) and/or on a network node of a telecommunications network (100) and/or on an application registry entity (300) and/or on an intermediate aggregator entity (200), or in part on a user equipment or device (20) and/or in part on the network node of the telecommunications network (100) and/or in part on an application registry entity (300) and/or in part on an intermediate aggregator entity (200), causes the computer and/or the user equipment or device (20) and/or the network node of the telecommunications network (100) and/or the application registry entity (300) and/or the intermediate aggregator entity (200) to perform a method according to one of claims 1 to 5.
